# EUROPÄISCHE PATENTSCHRIFT

(11) **EP 3 248 950 B1**
(45) Veröffentlichungstag und Bekanntmachung des Hinweises auf die Patenterteilung: **05.08.2020**
(21) Anmeldenummer: 16171047.0
(22) Anmeldetag: 24.05.2016
(51) Int. Cl.: C03B 19/06

(54) **VERFAHREN ZUR HERSTELLUNG EINES POREN ENTHALTENDEN, OPAKEN QUARZGLASES**
METHOD FOR PRODUCING AN OPAQUE QUARTZ GLASS CONTAINING PORES
PROCEDE DE PRODUCTION D'UN VERRE DE QUARTZ OPAQUE POREUX

(43) Veröffentlichungstag der Anmeldung: 29.11.2017
(73) Patentinhaber: Heraeus Quarzglas GmbH & Co. KG, 63450 Hanau (DE)
(72) Erfinder: Schenk, Christian, 55218 Ingelheim (DE); Scheich, Gerrit, 63500 Seligenstadt (DE); Tscholitsch, Nadine, 63457 Hanau (DE)
(74) Vertreter: Staudt, Armin Walter

(56) Entgegenhaltungen:
- EP-A2- 1 148 035
- EP-A2- 1 516 864
- WO-A1-88/03914
- DE-A1- 3 814 863
- DE-A1- 10 243 953
- DE-A1- 10 344 189
- DE-A1-102012 004 564
- KR-B1- 100 716 485
- US-A1- 2016 090 319

## Beschreibung

### Technologischer Hintergrund

Die Erfindung betrifft ein Verfahren zur Herstellung eines Poren enthaltenden, opaken Quarzglases umfassend die Verfahrensschritte:
(a) Erzeugen poröser SiO₂-Granulatteilchen durch Agglomeration amorpher, synthetisch erzeugter SiO₂-Primärpartikel,
(b) Thermisches Verdichten der SiO₂-Granulatteilchen unter Bildung von teilverdichteten SiO₂-Granulatteilchen,
(c) Bilden einer Dispersion, die eine Dispersionsflüssigkeit und darin dispergierte, teilverdichtete SiO₂-Granulatteilchen enthält,
(d) Zerkleinern mindestens eines Teils der teilverdichteten SiO₂-Granulatteilchen in der Dispersion unter Bildung eines Schlickers, der zerkleinerte SiO₂-Granulatteilchen enthält,
(e) Formen des Schlickers zu einem Formkörper und Entzug von Dispersionsflüssigkeit unter Bildung eines porösen SiO₂-Grünkörpers mit einer Gründichte pG, und
(f) Sintern des SiO₂-Grünkörpers zu dem opaken Quarzglas.

Opakes Quarzglas enthält kleine Blasen, die Lichtstreuung erzeugen und dem Glas ein transluzentes bis weißliches Aussehen verleihen. Zwischen Opazität und Transluzenz gibt es fließende Übergänge. Transluzenz bezeichnet die partielle Lichtdurchlässigkeit, die weniger auf optischer Absorption als auf Lichtstreuung beruht. Opazität ist die reziproke Eigenschaft der Transluzenz. Insoweit ist die Opazität ein Maß für die Lichtundurchlässigkeit des Quarzglases.

Zur Herstellung von opakem Quarzglas werden Siliziumdioxid-Rohstoffe natürlichen oder synthetischen Ursprungs eingesetzt. Solche synthetischen Ursprungs werden typischerweise aus organischen Siliziumverbindungen erzeugt, die durch Polymerisation, Polykondensation, Fällung oder CVD-Abscheideverfahren zu SiO₂ umgesetzt werden. Dabei fallen als Zwischen-, End- oder Beiprodukt feine Staubteilchen aus synthetischem SiO₂ an, die häufig als "SiO₂-Primärpartikel" bezeichnet werden.

Die typischen mittleren Teilchengrößen dieser SiO₂-Primärpartikel liegen beim Sol-Gel-Verfahren im Bereich von 0,5 µm und 5 µm, und bei der Flammenhydrolyse bei weniger 0,2 µm; diese werden in der Fachliteratur auch als "SiO₂-Nanoteilchen" oder als "SiO₂-Soot" bezeichnet. Wegen ihrer geringen Teilchengröße, ihrer hohen spezifischen Oberfläche und der geringen Dichte sind diese Primärpartikel nicht rieselfähig und zeigen beim direkten Einsatz bei der Quarzglas-Herstellung eine starke Schrumpfung. Sie werden deshalb in der Regel vorab granuliert und vorverdichtet.

Beispiele für geeignete Aufbau- oder Pressgranulierungsverfahren sind Rollgranulation in einem Granulierteller, Sprühgranulation, Zentrifugalzerstäubung, Wirbelschichtgranulation, Frostgranulation, Granulierverfahren unter Einsatz einer Granuliermühle, Kompaktierung, Walzenpressen, Brikettierung, Schülpenherstellung oder Extrudierung.

Beim Granulieren bilden sich durch Zusammenlagerung der SiO₂-Primärpartikel diskrete, größere Agglomerate, die hier als "SiO₂-Granulatteilchen" oder kurz "Granulatteilchen" bezeichnet werden. In ihrer Gesamtheit bilden die Granulatteilchen ein poröses "SiO₂-Granulat". Das poröse SiO₂-Granulat ist rieselfähig und zeigt ein gegenüber dem feinteiligen SiO₂-Staub erhöhtes Schüttgewicht, das durch thermische oder mechanische Behandlung weiter erhöht werden kann.

### Stand der Technik

Ein Verfahren zur Herstellung von geschlossenporigem opakem Quarzglas ist aus der US 4,042,361 A bekannt. Darin wird die Herstellung eines Quarzglastiegels aus opakem Quarzglas anhand eines Schlickergießverfahren unter Einsatz synthetischer Quarzglaskörnung beschrieben. Die Quarzglaskörnung wird aus pyrogen hergestelltem SiO₂-Soot, wie er als Filterstaub bei der Flammenhydrolyse einer Siliziumverbindung anfällt, hergestellt, indem aus dem lockeren SiO₂-Soot zunächst durch Einmischen in Wasser und Rühren ein Gel erzeugt wird, dessen Feststoffgehalt je nach Art und Geschwindigkeit des Rührvorgangs zwischen 30 und 45 Gew.-% variiert. Die nach dem Trocknen des Gels erhaltenen Fragmente werden bei Temperaturen zwischen 1150 °C und 1500 °C zu einer dichten, groben Quarzglaskörnung gesintert. Diese wird anschließend in einer Dispersionsflüssigkeit zu Korngrößen zwischen 1 µm bis 10 µm feingemahlen. Der dabei erzeugte Schlicker wird in eine Tiegelform gegossen, und die am Rand des Tiegels haftende Schicht wird unter Ausbildung eines porösen Grünkörpers getrocknet. Der Grünkörper wird anschließend bei einer Temperatur zwischen 1800 °C und 1900 °C zu dem Quarzglastiegel verglast.

Das bekannte Verfahren erfordert eine Vielzahl von Verfahrensschritten, die zum Teil mit hohem Energieaufwand verbunden sind, wie beispielsweise das Verglasen der grobkörnigen Gel-Fragmente zu der gewünschten Quarzglaskörnung. Bei Zerkleinerungs- und Mahlvorgängen besteht grundsätzlich die Gefahr einer Verunreinigung des Mahlguts und der Dispersion durch Abrieb aus dem Mahlwerkzeug, insbesondere wenn das Mahlgut hohe mechanische Festigkeit aufweist.

Aus der DE 102 43 953 A1 ist ein Verfahren zur Herstellung von opakem Quarzglas gemäß der eingangs genannten Gattung bekannt. Als Ausgangsmaterial wird ein SiO₂-Granulat aus porösen SiO₂-Granulatteilchen eingesetzt, die aus Agglomeraten nanoskaliger, amorpher, synthetisch erzeugter SiO₂-Primärteilchen mit einer mittleren Primärteilchengröße von weniger als 100 nm gebildet sind.

Zur Herstellung des SiO₂-Granulats wird ein Rollgranulierverfahren eingesetzt, das zu Granulatteilchen mit Teilchen im Bereich zwischen 100 µm bis 500 µm und mit einer spezifischen BET-Oberfläche von etwa 45 m²/g führt. Aus diesem Rohgranulat wird durch Behandlung im Drehrohrofen bei einer Temperatur von 1200 °C in chlorhaltiger Atmosphäre thermisch verfestigtes poröses "Feingranulat" mit einer spezifischen BET-Oberfläche von etwa 30 m²/g und einer Stampfdichte von etwa 1,3 g/cm³ erzeugt. Ein weiterer Teil des Rohgranulats wird durch Erhitzen auf eine höhere Temperatur von 1450 °C vollständig zu synthetischer Quarzglaskörnung mit einer spezifischen BET-Oberfläche von etwa 1 m²/g verglast. Die Teilchen des Feingranulats und der Quarzglaskörnung haben eine mittlere Größe (Median oder D₅₀-Wert) von weniger als 160 µm. Der D₅₀-Wert repräsentiert diejenige Teilchengröße, die von 50% des kumulativen Teilchenvolumens nicht erreicht wird.

Eine Aufbereitung einer 50:50-Mischung von SiO₂-Feingranulat und Quarzglaskörnung wird in deionisiertes Wasser eingerührt, wobei ein Litergewicht der Dispersion von 1,6 kg/l eingestellt wird. In einer mit Polyurethan ausgekleideten Kugelmühle wird die Dispersion ca. eine Stunde lang homogenisiert und anschließend in eine poröse Kunststoffform abgegossen, in der die Entwässerung und Scherbenbildung unter Bildung eines offenporigen Grünkörpers erfolgt. Bereits beim Trocknen kommt es zu einer festen Verbindung zwischen den einzelnen Granulatteilchen und zu einer Verdichtung und Verfestigung des Grünkörpers, die das nachfolgende Sintern erleichtern sollen.

Die DE 103 44 189 A1 beschreibt ein Verfahren zur Herstellung eines Gussteils aus opakem Quarzglas anhand eines Schlickergießverfahrens. Der SiO₂-Schlicker enthält amorphe SiO₂-Teilchen und Quarzglaskörnung. Die BET-Oberfläche der amorphen SiO₂-Teilchen liegt oberhalb von 1 m²/g, und die der Quarzglaskörnung beträgt weniger als 1 m²/g. Der SiO₂-Schlicker wird in einem Rollenbock unter Einsatz von Mahlkurgeln homogenisiert und abschließend in eine für Flüssigkeit undurchlässige, gekühlte Form gegossen. Es wird zunächst ein gefrorener Blaukörper gebildet, der anschließend getrocknet und gesintert wird. Bei der Form kann es sich um eine Membranform aus vakuumgeformtem Silikon handeln.

### Technische Aufgabenstellung

Bei der Granulation von SiO₂-Primärteilchen fällt in der Regel ein nicht gewünschter Feinanteil mit nicht oder unzureichend agglomeriertem Granulat an, der beim anschließenden Verarbeitung des Granulats Probleme erzeugt. Diesen Nachteil vermeidet die Sprühgranulation, wie sie beispielsweise aus der EP 1 148 035 A2 bekannt ist. Dabei ist die vorgegebene Größe der Granulatteilchen relativ genau einstellbar, indem der Feinanteil mit einem Durchmesser unterhalb von 100 µm direkt beim Granulierprozess mittels eines Zyklons abgetrennt wird.

Sprühgranulatteilchen haben eine sphärische Morphologie und liegen als Agglomerat einzelner sphärischer SiO₂-Primärteilchen vor, das durch leichten mechanischen Druck zerrieben und zerkleinert werden kann. Sie zeigen typischerweise einen Hohlraum und einen mittleren Korndurchmesser im Bereich vom 100 bis 300 µm. Die spezifische Oberfläche (nach BET) von Sprühgranulat liegt typischerweise um 30 m²/g. Die prozessspezifische Hohlraumbildung und die geringe Verdichtung beim Sprühgranulat führen bei der Verschlickerung zur Verdickung des Schlickers, weil die in den Hohlräumen und in der Porosität der Granulate gebundene Feuchte ausgeglichen werden muss. Die damit einhergehende Gefahr von Klumpenbildung wird durch geringe Feststoffgehalte des Schlickers vermieden.

Andererseits ermöglicht die Sprühgranulation eine kostengünstige Herstellung bei hoher Reproduzierbarkeit der Eigenschaften des Sprühgranulats; insbesondere des Durchmessers der Granulatteilchen. Es wäre daher wünschenswert, die genannten Nachteile zu vermeiden.

Der Erfindung liegt daher die Aufgabe zugrunde, eine Verfahrensweise zur Herstellung von opakem Quarzglas mittels Schlickergießen anzugeben, das auch für den Einsatz von Sprühgranulat geeignet ist.

### Allgemeine Darstellung der Erfindung

Hinsichtlich des erfindungsgemäßen Verfahrens zur Herstellung des Werkstoffs wird die oben genannte Aufgabe ausgehend von einem Verfahren der eingangs genannten Gattung erfindungsgemäß dadurch gelöst, dass
(i) dass beim thermischen Verdichten von Verfahrensschritt (b) teilverdichtete SiO₂-Granulatteilchen mit einer per BET-Sorptionsmessung ermittelten spezifischen Oberfläche BET-(A) im Bereich von 0,025 und 2,5 m²/g erzeugt werden,
(ii) und dass beim Zerkleinern von Verfahrensschritt (d) zerkleinerte SiO₂-Granulatteilchen mit einer per BET-Sorptionsmessung ermittelten spezifischen Oberfläche BET-(B) im Bereich von 4 und 10 m²/g erzeugt werden.

Das erfindungsgemäße Verfahren umfasst ein Schlickerverfahren, bei dem ein dem Quarzglas-Werkstoff vorgeschaltetes Zwischenprodukt in Form eines Grünkörpers anfällt. Der Grünkörper hat in der Regel eine Form, die der Endkontur des herzustellenden Quarzglas-Formkörpers nahe kommt. Es handelt sich beispielsweise um einen massiven Vollkörper, um einen Hohlkörper oder um eine Schicht auf einem Substrat. Der Grünkörper kann durch Ausgießen der Dispersion in eine Form erhalten werden. Es sind aber auch andere Verarbeitungsmethoden für die Dispersion geeignet, wie etwa Einsaugen in eine Form, Tauchen, Spritzen, Aufstreichen, Aufspachteln, Abziehen, Aufziehen, Aufrakeln und dergleichen.

Der Grünkörper wird getrocknet und daraus ein weitgehend wasserfreier Formkörper erhalten. Er wird zu einem gasdichtem, mechanisch stabilen Formkörper aus opakem Quarzglas gesintert. Die zum Sintern geeigneten Parameter (Sintertemperatur, Sinterdauer, Atmosphäre) sind anhand einfacher Versuche zu ermitteln. Der nach dem Sintern erhaltene Formkörper liegt als Schicht auf einem Substrat, als Hohlkörper oder als massiver Formkörper vor. Die darin enthaltenen Poren wirken in der Quarzglas-Matrix als optische Störstellen und führen dazu, dass der Werkstoff - je nach Schichtdicke - opak und undurchsichtig erscheint. Die Poren sind möglichst klein und gleichmäßig im Quarzglas-Werkstoff verteilt.

Das erfindungsgemäße Verfahren unterscheidet sich von der aus dem Stand der Technik bekannten Verfahrensweise im Wesentlichen darin, dass sowohl das eingesetzte Ausgangsmaterial als auch dessen Weiterverarbeitung zu dem opaken Quarzglas im Hinblick auf eine hohe Festigkeit des Grünkörpers optimiert sind. Genauer gesagt, zielt die Erfindung auf eine Optimierung der sogenannten Grünfestigkeit des Grünkörpers ab. Diese bestimmt maßgeblich die Art und Weise der Handhabung des Grünkörpers aber auch das Endergebnis nach dem Trocknen und Sintern. Denn wie bei einem beim Trocknen durch Spannungen oder Rissbildung geschwächten Grünkörper besteht auch bei einem von Anfang an mechanisch schwachen Grünkörper die Gefahr von Rissen und Bruch beim Sintern. Dies gilt insbesondere bei massiven, großvolumigen Körpern und bei Schichten von mehr als 3 mm aus opakem Quarzglas.

Die Optimierung der Grünfestigkeit stellt technische Anforderungen an mehrere Parameter und Verfahrensschritte der gesamten Prozesskette, die letztlich in einem Schlicker kulminieren, der "prozessfähig" in dem Sinne ist, dass die aus dem Schlicker erhaltenen Grünkörper makroskopisch grünfest sind. Die wichtigsten dieser Parameter und Verfahrensschritte werden im Folgenden näher betrachtet:

### 1. Reinheit

Kristallisation beim Sintern kann zum Ausschuss des Sinterkörpers führen. Die Kristallisationsneigung von Quarzglas nimmt bei Anwesenheit von Verunreinigungen zu, insbesondere bei Gegenwart von Alkali-Verunreinigungen.

Beim erfindungsgemäßen Verfahren wird von einem Schlicker aus synthetisch erzeugten SiO₂-Granulatteilchen ausgegangen. Diese bestehen aus undotiertem oder aus dotiertem SiO₂. Dotiertes SiO₂ kann in einer Menge bis maximal 3 Gew.-% andere oxidische, nitridische oder carbidische Komponenten enthalten.

Abgesehen von etwaigen Dotierstoffen beträgt der SiO₂-Gehalt dieser Teilchen vorzugsweise mindestens 99,99 Gew.-%. Unerwünschte Verunreinigungen sind maximal im sub-ppm-Bereich enthalten. Vorzugsweise liegt der Gesamt-Verunreinigungsgehalt an Li, Na, K, Mg, Ca, Fe, Cu, Cr, Mn, Ti, Al, Zr, Ni, Mo und W bei maximal 0,5 Gew.-ppm. Der Feststoffanteil einer unter Einsatz derartiger Teilchen hergestellten Suspension besteht zu mindestens 99,99 Gew.-% aus SiO₂. Bindemittel oder dergleichen Zusatzstoffe sind im Schlicker nicht vorgesehen. Im getrockneten Grünkörper findet sich kein Cristobalitanteil. Eine Schwächung des glasigen Gefüges von Grünkörper und Glas wird so vermieden.

### 2. Eigenschaften der SiO₂-Teilchen in Dispersion und Schlicker

Die Herstellung von opakem Quarzglas unter Einsatz eines Schlickers aus synthetisch erzeugten, amorphen SiO₂-Granulatteilchen ist grundsätzlich bekannt, wie beispielsweise aus dem eingangs genannten Stand der Technik. Dabei wird von einer Dispersion ausgegangen, die vollständig verglaste und thermisch verfestigte SiO₂-Granulatteilchen enthält, wobei angestrebt wird, die in der Dispersion vorgegebene Teilchengrößenverteilung bei der Homogenisierung der Dispersion möglichst wenig zu verändern. Daher wird empfohlen, auf ein nachträgliches Zerkleinern der Granulatteilchen im Schlicker möglichst zu verzichten, oder - bei Einsatz eines Nassmahlprozesses - einen möglichst schonendes Mahlverfahren anzuwenden, um das Zerfallen der porösen Granulatteilchen in ihre Agglomerat-Bestandteile aus SiO₂-Nanoteilchen möglichst zu vermeiden.

Demgegenüber ist beim erfindungsgemäßen Verfahren grundsätzlich ein Zerkleinern der teilverdichteten SiO₂-Granulatteilchen innerhalb der Dispersion vorgesehen, wobei das Zerkleinern darüber hinaus auch so intensiv ist, dass eine merkliche Verringerung der mittleren Teilchengröße bewirkt wird.

Das Zerkleinern der anfänglichen SiO₂-Granulatteilchen innerhalb der Dispersion kann beispielsweise durch Ultraschall, aber bevorzugt durch Nassmahlen erfolgen und es hat mehrere Wirkungen.
(a) Zum einen wird beim Zerkleinern laufend frische, reaktive SiO₂-Oberfläche erzeugt, die von der Dispersionsflüssigkeit verändert werden und chemisch-physikalische Wechselwirkungen mit anderen SiO₂-Teilchen bewirken kann. Derartige molekulare Bindungen tragen zur Stabilisierung des Schlickers und zu einer höheren Grünfestigkeit des Grünkörpers bei. Bei Dispersionen auf alkoholischer oder wässriger Basis kann die polare Natur die genannten Wechselwirkungen untereinander noch weiter fördern.
(b) Zum anderen haben die beim Zerkleinern erzeugten Bruchflächen und Bruchstücke in der Regel keine sphärische Morphologie, wie beispielsweise Sprühgranulatteilchen, sondern eine nicht-sphärische, zerklüftete, vorzugsweise splittrige Morphologie, die für ein dichtes, flächiges Zusammenlagern und für eine gegenseitige Verzahnung der SiO₂-Teilchen förderlich ist. Diese flächige Verzahnung an frisch erzeugten Bruchflächen der SiO₂-Teilchen bildet im Grünkörper eine Art "Kartenhausstruktur", die eine hohe Dichte des Grünkörpers (Gründichte) ermöglicht und die sich auf die Grünfestigkeit positiv auswirkt. Aus dem Grunde liegen im prozessfähigen Schlicker die SiO₂-Teilchen in Form von Bruchstücken vormaliger Granulatteilchen vor. Bevorzugt haben mindestens 80 % der SiO₂-Teilchen, besonders bevorzugt mindestens 90 % der SiO₂-Teilchen mit einer Teilchengröße von mehr als 5 µm eine splittrige Morphologie.

### 3. Eigenschaften der SiO₂-Teilchen vor und nach dem Zerkleinern

Bei der Herstellung eines prozessfähigen Schlickers durch Zerkleinern eines SiO₂-Granulats in der Dispersion kann sich die "Mahlbarkeit" des SiO₂-Granulats als problematisch erweisen.
(a) Beim Mahlen eines nur mechanisch verdichteten Granulats können die im Granulationsprozess gebildeten Agglomerate wieder zerfallen. Dabei freigesetzte SiO₂-Nanoteilchen bewirken bei der Herstellung des Grünkörpers eine geringe Gründichte, die beim Trocknen und Sintern zu erhöhter Schwindung des Grünkörpers und zu Rissbildung führen kann. Aus diesem Grund wird im eingangs genannten Stand der Technik eine möglichst schonende Homogenisierung der Dispersion empfohlen.
   Es hat sich gezeigt, dass derartige gering verdichtete Granulatteilchen nicht in ausreichendem Maß zu Granulatteilchen-Bruchstücken zerkleinert werden können. Bei geringer Intensität des Zerkleinerungsvorgangs bilden sich zu wenige Bruchflächen und bei hoher Intensität findet die erwähnte unerwünscht hohe Freisetzung von SiO₂-Nanoteilchen statt.
(b) Beim erfindungsgemäßen Verfahren werden daher die SiO₂-Granulatteilchen vor dem Zerkleinern thermisch vorverdichtet. Aber auch die thermische Teilverdichtung (im Folgenden auch als "thermische Vorverdichtung" bezeichnet) führt nicht ohne weiteres zum Ziel. Sowohl eine zu geringe als auch eine zu hohe thermische Verfestigung kann zu einer unzureichenden Ausbildung von Bruchstücken der Granulatteilchen führen, wie sie den prozessfähigen Schlicker auszeichnen und die einen Grünkörper mit hoher Grünfestigkeit mit einem Gefüge in Kartenhausstruktur ermöglichen.
   Eine zu geringe thermische Verfestigung (die per BET-Sorptionsmessung ermittelte spezifische Oberfläche vor der thermischen Verdichtung (hier als BET-(A) bezeichnet) ist größer als 2,5 m²/g) führt zur erhöhten Freisetzung von lediglich agglomerierten SiO₂-Nanoteilchen in den Schlicker. Eine zu hohe thermische Verfestigung (die per BET-Sorptionsmessung ermittelte spezifische Oberfläche BET-(A) ist kleiner als 0,025 m²/g erschwert das Zerkleinern und führt eher zu Abrieb als zu Bruchstücken; insbesondere wenn die verdichteten Granulatteilchen sphärisch sind.
   Um einen hohen Anteil an gebrochenen Granulatteilchen zu erzeugen, wird von teilverdichteten SiO₂-Granulatteilchen ausgegangen, bei denen die per BET-Sorptionsmessung ermittelte spezifische Oberfläche (BET-(A)im Bereich von 0,025 bis 2,5 m²/g, vorzugsweise bei weniger als 0,8 m²/g und besonders bevorzugt bei weniger als 0,5 m²/g liegt. Diese geringe spezifische Oberfläche ist ein Maß für die vergleichsweise hohe Dichte und den Grad der thermischen Verfestigung der teilverdichteten SiO₂-Granulatteilchen, die Vorbedingung ihrer Mahlbarkeit und der Eignung für einen prozessfähigen Schlicker sind.
   Die Teilchengrößenverteilung im Schlicker und insbesondere der Anteil der in Form von Bruchstücken vorliegenden SiO₂-Teilchen hängt von der ursprünglichen Teilchengrößenverteilung vor dem Zerkleinern und von den Parametern wie Dauer und Intensität des Zerkleinerungsvorgangs ab. Ein geeignetes Maß zur Definition der Teilchengrößenverteilung ist die nach dem Zerkleinerungsprozess vorliegende BET-Oberfläche (hier als BET-(B)) bezeichnet. Es hat sich gezeigt, dass gering vorverdichtete Granulatteilchen sowohl zu einer hohen BET-(B) Oberfläche neigen, was auf die Desintegration von Agglomeraten zurückzuführen ist, und dass auch der Unterschied zwischen den spezifischen Oberflächen BET-(A) und BET-(B) groß ist; beispielsweise größer als 7 m²/g. Andererseits zeigen sehr hoch verdichtete Granulatteilchen nach dem Zerkleinern sowohl vor als auch nach dem Zerkleinern eine vergleichsweise geringe BET-Oberfläche. Insbesondere ist der Unterschied zwischen den spezifischen Oberflächen BET-(A) und BET-(B) in diesen Fällen vergleichsweise klein, beispielsweise kleiner als 4 m²/g.
   In dieser Hinsicht zeigen vorverdichtete Granulatteilchen, die zu einem prozessfähigen Schlicker führen, ein charakteristisch anderes Verhalten. Diese Granulatteilchen haben zwar vor dem Zerkleinern eine geringe BET-(A)-Oberfläche, die durchaus in der Größenordnung von vollständig verglasten Granulatteilchen liegen kann (nämlich zwischen 0,025 und 2,5 m²/g, wie oben erörtert), ihre spezifischen BET-(B)-Oberfläche steigt aber nach dem Zerkleinerungsprozess merklich stärker an als bei vollständig verglasten Granulatteilchen aber weniger als bei gering vorverdichteten Granulatteilchen und liegt letztlich im Bereich zwischen 4 und 10 m²/g. Der Unterschied zwischen den spezifischen Oberflächen BET-(A) und BET-(B) liegt vorzugsweise im Bereich von 4 bis 7,5 m²/g. Dieser Effekt kann auf die innere Rest-Porosität der Granulatteilchen zurückgeführt werden, die durch die Zerkleinerung an die Bruchfläche gelangen und dort zusätzliche Oberfläche bereitstellen.
   Der Zerkleinerungs- beziehungsweise Mahlprozess unter Bildung nichtsphärischer, zerklüfteter, splittriger SiO₂-Teilchen zwecks Ausbildung eines Grünkörpers mit "Kartenhausstruktur" ist daher bei Einsatz thermisch sowohl zu gering verdichteter als auch bei hochverdichteter SiO₂-Körnung erschwert.
(c) Da ihre Mahlbarkeit erschwert ist und sich die Körner im Mahlprozess eher abreiben als zerkleinern lassen, ist auch eine runde Ausgangsform der SiO₂-Granulatteilchen mit kleinem Aspektverhältnis verfahrenstechnisch eher weniger günstig als eine plättchen- oder flockenartige Ausgangsform der Granulatteilchen mit erhöhtem Aspektverhältnis (>2). Dem kann durch die Anpassung der Intensität des Zerkleinerungsschrittes Rechnung getragen werden.
   Darüber hinaus erweisen sich runde SiO₂-Teilchen auch im Mikrogefüge des Grünkörpers als nachteilig hinsichtlich der Grünfestigkeit, was darauf zurückgeführt werden kann, dass sie sich nur kohäsiv und punktuell an wenigen Kontaktpunkten miteinander verbinden.

### 4. Gründichte und Grünfestigkeit

Die Gründichte nach dem Trocknen des Grünkörpers wird maßgeblich durch den Feststoffgehalt des Schlickers beim Formungsschritt und durch die örtliche Verteilung, spezifische Oberfläche und Morphologie der teilverdichteten und zerkleinerten SiO₂-Granulatteilchen, und diese wiederum durch die "Mahlbarkeit" der teilverdichteten Granulatteilchen und deren spezifische BET-(B)-Oberfläche bestimmt. Insbesondere das Zusammenspiel von Mahlbarkeit der SiO₂-Granulatteilchen und beim Zerkleinern tatsächlich erzeugter Verteilung und Morphologie der Bruchstücke führen zu einem prozessfähigen Schlicker, der sich zu einem Grünkörper mit ausreichend hoher Dichte (Gründichte pG) und Grünfestigkeit verarbeiten lässt.

Der Feststoffgehalt des Schlickers ergibt sich im Wesentlichen durch den Gewichtsanteil der SiO₂-Teilchen, der vorzugsweise mindestens 70 %, besonders bevorzugt mindestens 75 % beträgt. Eine vergleichsweise hohe und daher bevorzugte Gründichte im Bereich 1,6< pG < 1,9 g/cm³ ist ein Hinweis auf eine geeignete Verteilung und Morphologie der SiO₂-Teilchen, wie oben erläutert, die zu einer oft als "Kartenhausstruktur" bezeichneten Verkeilung oder Verzahnung der Körner im Grünkörper führt. Die Kartenhausstruktur der Körner in Verbindung mit einer hohen Gründichte im genannten Bereich kann deshalb als notwendige Bedingung für die Grünfestigkeit des getrockneten Grünkörpers betrachtet werden, die wiederum zur Weiterverarbeitung des Grünkörpers nötig ist, ohne dass es zu Beschädigungen kommt. Ein zu hoher Anteil an SiO₂ Nanoteilchen, wie er bei unzureichend vorverdichtetem Granulat beim Zerkleinerungsschritt auftritt, führt zu einer verminderten Gründichte und kann eine geringe Grünfestigkeit des Grünkörpers bewirken.

Ein prozessfähiger Schlicker enthält in Idealfall 100 % Granulatteilchen, wie oben definiert. Ein gewisser Anteil bis zu maximal 30 Gew.-% an voll verglasten Granulatteilchen kann unschädlich sein. Zu gering verdichtetes Granulat macht sich jedoch bereits in geringeren Mengen (ab etwa 20 Gew.-%) ungünstig bemerkbar.

Bei einer bevorzugten Verfahrensvariante weisen die zerkleinerten SiO₂-Granulatteilchen eine endgültige Teilchengrößenverteilung auf, definiert durch einen D₁₀-Wert D₁₀(B) < 5 µm und einen D₉₀-Wert D₉₀(B) < 50 µm.

Die endgültige Teilchengrößenverteilung der SiO₂-Teilchen im fertigen Schlicker setzt sich zusammen aus einem Anteil ursprünglicher, teilverdichteter SiO₂-Granulatteilchen (sofern überhaupt noch vorhanden) sowie aus Abrieb und Bruch der teilverdichteten SiO₂-Granulatteilchen resultierenden Partikel.

Die Teilchengrößenverteilung im Schlicker und insbesondere der Anteil der in Form von Bruchstücken vorliegenden SiO₂-Granulatteilchen wird durch die Intensität des Zerkleinerungsprozesses gemäß Verfahrensschritt (d) bestimmt. Ein Maß für die Intensität des Zerkleinerungsprozess ergibt sich aus dem Unterschied zwischen den Teilchengrößenverteilungen vor und nach dem Zerkleinern. Um einen hohen Anteil an gebrochenen teilverdichteten SiO₂-Granulatteilchen zu erzeugen, wird vorteilhafterweise von einer anfänglichen Teilchengrößenverteilung der Granulatteilchen ausgegangen, für die gilt: D₁₀(A) > 15 µm und D₉₀(B) > 105 µm.

Es hat sich gezeigt, dass die Mahlbarkeit der teilverdichteten SiO₂-Granulatteilchenvon der spezifischen Mikroporenfläche abhängt. Bei einer besonders bevorzugten Verfahrensvariante vorgesehen, dass die SiO₂-Granulatteilchen vor dem Zerkleinern gemäß Verfahrensschritt (d) bei einer Temperatur im Bereich von 800 °C bis 1300 °C derart teilverdichtet werden, dass die teilverdichteten SiO₂-Granulatteilchen eine per BET-Sorptionsmessung ermittelte spezifische Mikroporenfläche von weniger als 0,25 m²/g, bevorzugt eine Mikroporenfläche von weniger als 0,1 m²/g aufweisen. Von der per BET-Sorptionsmessung ermittelten spezifischen (Gesamt-BET-Oberfläche entfallen somit weniger als 0,25 m²/g (vorzugsweise weniger als 0,1 m²/g) auf die Mikroporenfläche.

Die spezifische BET-Oberfläche setzt sich zusammen aus den Flächenanteilen von offenen Mikroporen sowie der äußeren Oberfläche der Granulatteilchen. Die Mikroporenfläche bezieht sich auf den Beitrag an Innenoberfläche von Poren mit Porengrößen von weniger als 2 nm. Diese Art der Oberfläche ist ein Maß für den Verglasungsgrad des einzelnen SiO₂-Granulatteilchens. Je vollständiger die Verglasung und je transparenter die teilverdichteten SiO₂-Granulatteilchen sind, umso geringer ist die Mikroporenfläche. Allerdings ist eine vollständige thermische Verdichtung der einzelnen SiO₂-Granulatteilchen in der Granulat-Schüttung problematisch, denn sie steht in Konkurrenz zu der dabei ebenfalls auftretenden und unerwünschten Verbindung der SiO₂-Granulatteilchen untereinander, und sie ist im Hinblick auf eine einfache Mahlbarkeit der Granulatteilchen auch nicht erwünscht. Daher beträgt die Verdichtungstemperatur bevorzugt weniger als 1300 °C. Die dabei erhaltenen Granulatteilchen sind nicht vollständig verglast, sondern zeigen eine gewisse Opazität oder Transluzenz, die auf mindestens teilweise Mikroporen zurückzuführen ist. Ist die Oberfläche der Granulatteilchen verglast und die Mikroporen geschlossen, sind sie zwar visuell anhand der Opazität oder Transluzenz sichtbar, sie werden aber per BET-Sorptionsmessung nicht erfasst. Sie zeigen sich aber in einer merklich erhöhten BET-(B)-Oberfläche nach dem Zerkleinern der Granulatteilchen. Denn die Mikroporen liegen dann an den Bruchflächen offen zutage.

Es hat sich bewährt, wenn der Schlicker beim Formen zu dem Formkörper eine mehrmodale Teilchengrößenverteilung aufweist, mit einem ersten Maximum bei einer Teilchengröße von weniger als 5 µm und einem zweiten Maximum bei einer Teilchengröße von mehr als 20 µm.

Bei dieser Verfahrensvariante machen SiO₂-Teilchen mit Teilchengrößen im Bereich zwischen 1 µm und 60 µm den größten Volumenanteil aller Teilchen im prozessfähigen Schlicker aus. Die SiO₂-Teilchen zeigen eine mehrmodale Teilchengrößenverteilung mit mindestens zwei, vorzugsweise drei und mehr Verteilungsmaxima. Dabei liegt ein erstes Maximum der Größenverteilung im Bereich von etwa 0,5 bis 5 µm, und ein zweites Maximum liegt im Bereich von 5 bis 50 µm. Dies erleichtert die Einstellung einer hohen Feststoffdichte im Schlicker und eine hohe Gründichte, wodurch die Schrumpfung beim Trocknen und Verdichten und damit die Gefahr einer Rissbildung weiter vermindert werden.

Sphärische Körnungsteilchen zeigen grundsätzlich eine vergleichsweise gute Rieselfähigkeit. Bei gebrochenen SiO₂-Teilchen mit splittriger Morphologie ergibt sich demgegenüber eine gewisse Verzahnung innerhalb einer Schüttung, was die Rieselfähigkeit der Schüttung verringert aber die Sinteraktivität infolge der flächigen und nicht nur punktuellen Kontakte erhöht.

Bei einer bevorzugten Verfahrensweise werden die SiO₂-Granulatteilchen vor ihrem Einsatz bei einer Temperatur im Bereich von 800 °C bis 1300 °C derart teilverdichtet, dass das teilverdichtete Granulat eine Schüttdichte im Bereich von 0,7 bis 1 g/cm³ aufweist.

Das Teilverdichten erfolgt vorzugsweise unter einer chlorhaltigen Atmosphäre. Die chlorhaltige Atmosphäre trägt zur Reinigung der Granulatteilchen bei. Das teilverdichte Granulatteilchen aus synthetischem SiO₂ zeichnet sich durch hohe Reinheit aus.

Wird der Schlicker vor dem Formgießen beziehungsweise vor dem Aufbringen der Schlickerschicht einem Vakuum ausgesetzt, können etwaige gasgefüllte, große Blasen entfernt werden. Große Blasen können zu vergleichsweise großen Poren im Grünkörper führen, die die Grünfestigkeit verringern.

Das erfindungsgemäß hergestellte opake Quarzglas eignet sich insbesondere zur Wärmedämmung bei hohen Temperaturen. Es zeigt die auch sonst für Quarzglas charakteristischen und vorteilhaften Eigenschaften, wie einen niedrigen thermischen Ausdehnungskoeffizienten, eine hohe Temperaturstabilität sowie eine gute chemische Beständigkeit gegenüber vielen Prozessmedien. Es wird für den Einsatz in der Halbleiterfertigung zur Prozessierung von Halbleiterkomponenten und zur Optimierung des Wärmemanagements in Prozesskammern eingesetzt. Die Bauteile aus dem opaken Quarzglas haben dabei typischerweise die Form von Reaktoren, Apparaturen, Trägerhorden, Glocken, Tiegeln, Schutzschilden oder einfachen Quarzglas-Bauteilen, wie Rohren, Stäben, Platten, Flanschen, Ringen oder Blöcken.

### Definitionen und Messmethoden

Einzelne Verfahrensschritte und Begriffe der obigen Beschreibung sowie Messmethoden werden im Folgenden ergänzend definiert. Die Definitionen sind Bestandteil der Beschreibung der Erfindung. Bei einem inhaltlichen Widerspruch zwischen einer der folgenden Definitionen und der übrigen Beschreibung ist das in der Beschreibung Gesagte maßgeblich.

### Quarzglas

Unter Quarzglas wird hier hochkieselsäurehaltiges Glas mit einem SiO₂-Anteil von mindestens 90 mol.-% verstanden.

### Granulate

Man kann zwischen Aufbaugranulation und Pressgranulation und verfahrenstechnisch zwischen Nass-, Trocken- und Frost-Granulierverfahren unterscheiden. Bekannte Methoden sind Rollgranulation in einem Granulierteller, Sprühgranulation, Zentrifugalzerstäubung, Wirbelschichtgranulation, Granulierverfahren unter Einsatz einer Granuliermühle, Kompaktierung, Walzenpressen, Brikettierung, Schülpenherstellung oder Extrudierung.

Beim Granulieren bilden sich durch Zusammenlagerungen der SiO₂-Primärteilchen diskrete, größere Agglomerate, die hier als "SiO₂-Granulatteilchen" oder kurz "Granulatteilchen" bezeichnet werden. In ihrer Gesamtheit bilden die SiO₂-Granulatteilchen ein "SiO₂-Granulat".

### Reinigung

Das Granulat beziehungsweise ein aus dem Granulat erzeugter Pressling werden in der Regel vor dem Sintern gereinigt. Die Hauptverunreinigungen sind Restwasser (OH-Gruppen), kohlenstoffhaltige Verbindungen, Übergangsmetalle, Alkalimetalle und Erdalkalimetalle, die aus dem Einsatzmaterial stammen oder durch die Prozessierung eingetragen werden. Bereits durch Einsatz reiner Einsatzmaterialien und durch entsprechendes Equipment und Prozessierung unter Reinraumbedingungen kann ein geringer Verunreinigungsgehalt erreicht werden. Um noch höhere Anforderungen an die Reinheit zu erfüllen, kann das Granulat beziehungsweise der Pressling bei hoher Temperatur (bis zu 1200 °C) unter chlorhaltiger und sauerstoffhaltiger Atmosphäre behandelt werden. Dabei dampft restliches Wasser ab, organische Materialien reagieren zu CO und CO₂ und viele Metalle (wie beispielsweise Eisen und Kupfer) können zu flüchtigen, chlorhaltigen Verbindungen konvertiert werden.

### Teilverdichtung der SiO₂-Granulatteilchen

Mit "Teilverdichten" wird hier eine Temperaturbehandlung bezeichnet, bei dem ein SiO₂-Granulat bei erhöhter Temperatur von mehr als 800 °C entweder in einem dynamischem Ofen (beispielsweise in einem Drehrohrofen) oder in einem statischen Ofen (beispielsweise in einem Kammerofen) behandelt wird. Dabei verringert sich die spezifische Oberfläche (BET), wohingegen die Schüttdichte und die mittlere Partikelgröße aufgrund von Agglomerationen von Granulatteilchen zunehmen können. Der Grad der Teilverdichtung wird durch die Temperatur und die Dauer der Temperaturbehandlung bestimmt.

### Teilchengröße und Teilchengrößenverteilung

Teilchengröße und Teilchengrößenverteilung werden anhand der D₁₀- beziehungsweise D₉₀-Werte charakterisiert. Diese Werte werden aus Partikelgrößen-Verteilungskurven entnommen, die das kumulative Volumen der SiO₂-Partikel in Abhängigkeit von der Partikelgröße zeigen. Dabei kennzeichnet der D₁₀-Wert diejenige Partikelgröße, die von 10% des kumulativen Volumens der SiO₂-Partikel nicht erreicht wird und dementsprechend der D₉₀-Wert diejenige Partikelgröße, die von 90% des kumulativen Volumens der SiO₂-Partikel nicht erreicht wird. Die Partikelgrößenverteilung wird durch Streulicht- und Laserbeugungsspektroskopie nach ISO 13320 ermittelt.

### Splittrige SiO₂-Granulatteilchen

Beim Zerkleinern von teilverdichtetem SiO₂-Granulat werden Bruchstücke der ursprünglichen Granulatteilchen erzeugt. Diese zeigen Bruchflächen und in der Regel eine splittrige, nicht-sphärische Morphologie mit einem Aspektverhältnis (auch als "Strukturverhältnis" bezeichnet) von mindestens 2. Unter dem "Aspektverhältnis" wird das Verhältnis von größter Strukturbreite des Granulat-Bruchteilchens und seiner Dicke verstanden. Ein Aspektverhältnis von mindestens 2 bedeutet demnach, dass die größte Strukturbreite mindestens zweimal größer ist als seine Dicke.

### Spezifische Oberfläche

Die spezifische Oberfläche wird aufgrund einer Sorptionsmessung nach der Methode von Brunauer, Emmet und Teller (BET-Methode) anhand DIN 66132 ermittelt und basiert auf Gasabsorption an der zu messenden Oberfläche.

### Messung des Porenvolumens

Das "Porenvolumen" eines porösen Materials bezeichnet das von Hohlräumen belegte, freie Volumen innerhalb des Materials. Das Porenvolumen wird beispielsweise mittels eines Porosimeters gemessen, wobei eine nicht benetzende Flüssigkeit (wie beispielsweise Quecksilber) unter Einwirkung eines äußeren Drucks in die Poren eines porösen Materials gegen die entgegenwirkenden Oberflächenspannungskräfte gepresst wird. Die dazu benötigte Kraft ist umgekehrt proportional zur Porengröße und daher kann neben dem Porengesamtvolumen auch die Porengrößenverteilung der Probe ermittelt werden. Die Quecksilberporosimetrie erfasst nur Porengrößen oberhalb von 2 nm (Mesoporen und Makroporen).

"Mikroporen" sind Poren mit Porengrößen von weniger als 2 nm. Deren Beitrag zur Porosität und zur spezifischen Oberfläche wird anhand der mittels der V-t-Methode mittels Stickstoffabsorption ermittelt, wobei eine Probe bei unterschiedlichen Drücken und 77 K gehalten wird. Die Methode gleicht der der BET-Methode, wobei der Druckbereich zu höheren Drücken ausgedehnt ist, so dass auch Oberflächen des nicht mikroporösen Teils des Materials erfasst werden.

### Messung der Grünfestigkeit

Die Grünfestigkeit ist eine für keramische Prozesse wichtige Größe zur Beurteilung der Bauteilstabilität und Bearbeitbarkeit des ungesinterten Grünkörpers. Sie wird anhand standardisierter Laborproben im Dreipunkt-Biegezugversuch nach ISO 3995:1985 bestimmt. Dabei werden die einzelnen Probenkörper in einer Prüfmaschine bei konstanter Vorschubgeschwindigkeit bis zum Einsetzen des Bruchs deformiert, wobei die aufgebrachte Kraft per Messdose bestimmt wird. Aus dieser ergibt sich nach Umrechnung aus der rechteckigen Querschnittsfläche der jeweilige Festigkeitswert (Einheit: MPa = 10⁶ N/mm²).

### Ausführungsbeispiel

Nachfolgend wird die Erfindung anhand von Ausführungsbeispielen und einer Zeichnung näher erläutert. Dabei zeigen im Einzelnen:
- **Figur 1**: ein Fließdiagramm zur Erläuterung der erfindungsgemäßen Verfahrensweise zur Herstellung von opakem Quarzglas,
- **Figur 2**: ein Diagramm mit einem Verlauf von spezifischen Oberflächen der Granulate für verschiedene Chargen,
- **Figur 3**: eine mikroskopische Aufnahme von teilverdichtetem Sprühgranulat vor dem Zerkleinern, und
- **Figur 4**: eine rasterelektronenmikroskopische Aufnahme des teilverdichteten Sprühgranulats nach dem Zerkleinern.

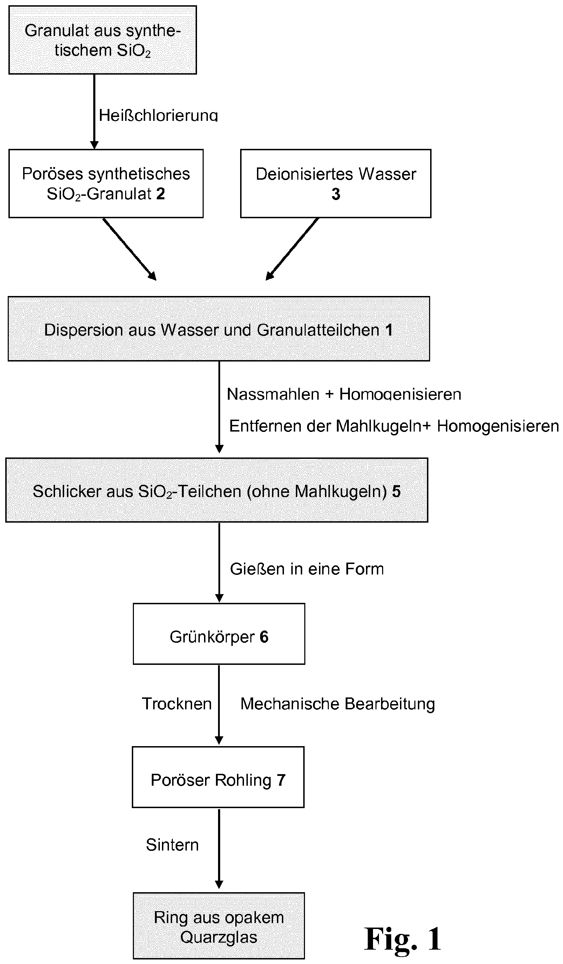

Nachfolgend wird das erfindungsgemäße Verfahren anhand **Figur 1** und der Herstellung eines Flansches aus opakem Quarzglas für einen Reaktor zur Prozessierung von Halbleiter-Wafern beispielhaft erläutert.

### Synthese von SiO₂-Primärteilchen

Die Herstellung von synthetischem Quarzglas erfolgt unter Einsatz von Flammhydrolysebrennern, denen jeweils als Brennergase Sauerstoff und Wasserstoff sowie als Einsatzmaterial für die Synthese von SiO₂ zugeführt werden. Dabei bilden sich SiO₂-Sootpartikel in Form von Agglomeraten oder Aggregaten der SiO₂-Primärteilchen mit Partikelgrößen im Nanometerbereich. Die SiO₂-Sootpartikel werden beispielsweise auf der Zylindermantelfläche eines um seine Längsachse rotierenden Trägerrohrs abgeschieden, so dass schichtweise ein Sootkörper aufgebaut wird. Ein Teil der SiO₂-Sootpartikel gelangt über eine Absaugung in eine Filteranlage und fällt als sogenannter "Sootstaub" an. Dieses pyrogen erzeugte, hochreine SiO₂-Sootmaterial liegt in einer Partikelgröße von weniger als 100 nm vor und hat typischerweise eine spezifische Oberfläche (nach BET) von mehr als 100 m²/g und eine Schüttdichte von etwa 0,1 kg/l. Es wird bei diesem Verfahren für die Herstellung von SiO₂-Granulat eingesetzt.

### Herstellung von SiO₂-Granulat

Dabei wird der hochreine, pyrogene erzeugte SiO₂-Sootstaub in deionisiertem Wasser dispergiert und aus der Dispersion anhand üblicher Sprühgranulation das synthetische SiO₂-Granulat erzeugt. Die SiO₂-Granulatteilchen liegen als Agglomerat einzelner sphärischer SiO₂-Primärteilchen vor. Das Agglomerat der SiO₂-Primärteilchen ist lose, so dass es durch leichten mechanischen Druck zerrieben und zerkleinert werden kann. Zwischen den SiO₂-Primärteilchen sind offene Porenkanäle ausgebildet.

Bei der Sprühgranulation wird die Sprüh-Dispersion unter Einsatz eines handelsüblichen Sprühtrockners bei einer Heißlufttemperatur von 400 °C und einem Schlickerdruck von 10,5 bar versprüht. Dabei wird ein Sprühgranulat mit einem mittleren Korndurchmesser von 214 µm erhalten. Der Feinanteil mit einem Durchmesser unterhalb von 100 µm wird herstellungsbedingt bereits bei der Sprühgranulation mittels eines Zyklons abgetrennt. Die spezifische Oberfläche (nach BET) des Sprühgranulats beträgt 30 m²/g und die Schüttdichte liegt bei 0,8 kg/l. Die Kennwerte für die anfängliche Teilchengrößenverteilung sind: D₁₀(A) = 110 µm und D₉₀(A) = 280 µm.

### Reinigen und Verdichten des Granulats

Das SiO₂-Granulat wird anschließend entweder dynamisch oder statisch thermisch vorverdichtet.

Die dynamische Vorverdichtung erfolgt in einem Drehrohrofen in einem HCl/Cl₂-Gasgemisch. In einer Versuchsreihe wurde die Anzahl der Behandlungszyklen bei gleicher Maximaltemperatur von 1200 °C variiert, wie in Tabelle 1 angegeben. Die mittlere Verweilzeit pro Behandlungszyklus beträgt vier Stunden. Mit zunehmender Behandlungsdauer verringert sich die spezifische Oberfläche (BET) und die Schüttdichte nimmt geringfügig zu. Die Kennwerte für die anfängliche Teilchengrößenverteilung D₁₀(A) und D₉₀(A) = 250 µm nehmen aufgrund der Sinterschrumpfung tendenziell ab.

Zur statischen Vorverdichtung werden die SiO₂-Granulatteilchen in einem Grafittiegel aufgenommen und in einem Kammerofen auf eine Temperatur von 1200 °C aufgeheizt. Die Verweildauer beträgt hierbei 36 Stunden. Dabei verringert sich die spezifische Oberfläche (BET), wohingegen die Schüttdichte signifikant im Vergleich zu den dynamisch verdichteten Granulatteilchen zunimmt.

Zur Herstellung einer Referenzprobe "R" aus dichter, transparenter Quarzglaskörnung wird eine Charge des SiO₂-Sprühgranulats in einen evakuierbaren Tiegel eingebracht und unter Vakuum (Restdruck < 2 mbar) während einer Haltedauer von vier Stunden lang auf eine Temperatur von 1450 °C erhitzt. Die vollständig verglasten SiO₂-Teilchen sind transparent und haben keine oder wenige, kleine Blasen. Daher erscheinen sie transparent. Ihre BET-Oberfläche, die spezifische Mikroporenfläche und die spezifische Außenfläche sind so wie bei den Granulatteilchen bei der statischen Vorverdichtung. Die Teilchengrößenkennzahlen für das dabei erhaltene, vollständig verglaste Granulat sind: D₅₀(A): 166 µm, D₁₀(A): 120 µm und D₉₀(A): 285 µm. Diese Quarzglaskörnung wird als "Referenzprobe" für die Herstellung eines Grünkörpers verwendet.

Nach dieser Reinigungs- und Sinterbehandlung sind die SiO₂-Granulatteilchen thermisch verdichtet. Die einzelnen SiO₂-Primärteilchen sind durch sogenannte "Halsbildung" relativ fest miteinander verwachsen. Die vor dem Sintern vorhandenen Porenkanäle haben sich verengt, können aber je nach Intensität der thermischen Einwirkung (Sintertemperatur und Sinterdauer) noch durchgängig und mindestens teilweise offen sein.

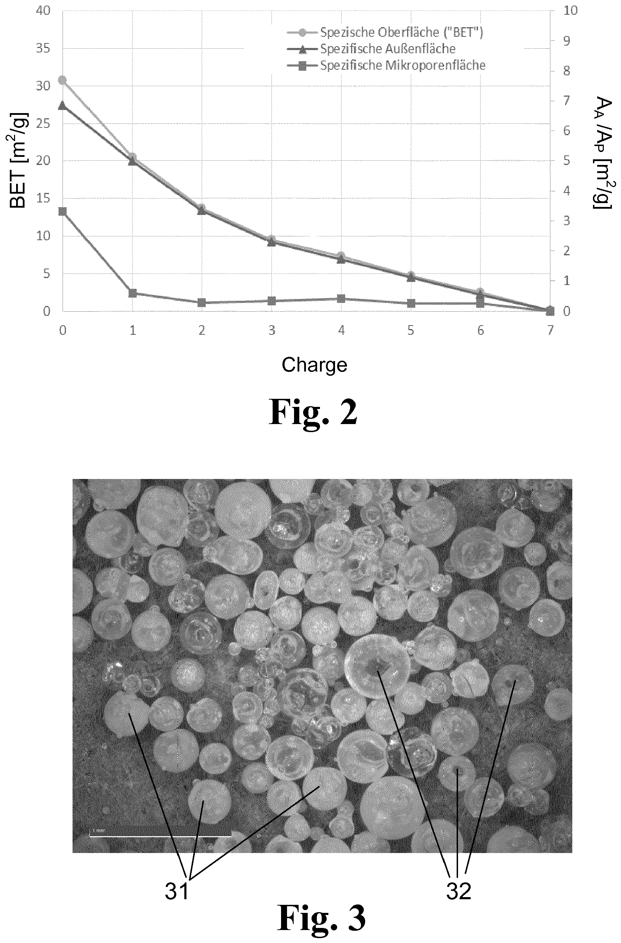

Aus dem Foto von **Figur** 3 ist erkennbar, dass nach des statischen Vorverdichtung im Grafittiegel die Granulatkörner 31 weiterhin vereinzelt sind, also nicht oder wenig untereinander verbacken sind. Sie haben sphärische Form mit anscheinend monomodaler Teilchengrößenverteilung bei einem Durchmessermaximum um 250 µm. Der ursprüngliche Hohlraum 32 des Sprühgranulats ist deutlich erkennbar. Die meisten der Granulatkörner enthalten noch Mikroporen und sind deswegen optisch transluzent oder opak.

Jedes verdichtete Granulat wird anhand seiner Teilchengrößenverteilung charakterisiert. Wegen Optimierung in Bezug auf eine hohe Grünfestigkeit ist eine zweimodale Teilchengrößenverteilung erwünscht. Für jede Charge des teilverdichteten SiO₂-Granulats wurden außerdem die spezifische BET-Oberfläche, die spezifische Außenfläche, das spezifische Mikroporenvolumen, die Schüttdichte und die Reinheit bestimmt. Der Gesamtgehalt der Verunreinigungen an Li, Na, K, Mg, Ca, Fe, Cu, Cr, Mn, Ti, Al, Zr, Ni, Mo und W beträgt weniger als 200 Gew.-ppb. Die genannten Verunreinigungen werden mittels ICP-OES oder ICP-MS-Methoden ermittelt. Die übrigen Messergebnisse sind ebenfalls in Tabelle 1 angegeben.

### Herstellung einer Dispersion (eines Schlickers) aus den SiO₂-Granulatteilchen

Für einen Ansatz von 10 kg Grundschlicker 1 (SiO₂-Wasser-Schlicker) werden in einer mit Quarzglas ausgekleideten Trommelmühle mit ca. 20 Liter Volumeninhalt, 8,2 kg der amorphen, synthetischen Quarzglaskörnung 2 mit 1,8 kg deionisiertem Wasser 3 mit einer Leitfähigkeit von weniger als 3 µS vermischt.

Diese Mischung wird mittels Mahlkugeln aus Quarzglas auf einem Rollenbock bei 23 U/min während einer Dauer von 3 Tagen soweit vermahlen, dass sich ein homogener Grundschlicker 1 mit einem Feststoffgehalt von 78 % bildet. Im Verlauf des Nassvermahlens werden die vorab thermisch verdichteten Granulatteilchen in Abhängigkeit ihrer Teilchenform und Größe sowie ihres Verdichtungsgrades weiter zerkleinert.

Anschließend werden aus dem so erhaltenen Grundschlicker 1 die Mahlkugeln entfernt und der Schlicker wird weitere 12 Stunden homogenisiert. Das eingesetzte SiO₂-Granulat mit der ursprünglichen Teilchengrößenverteilung D(A), gekennzeichnet durch einen D₁₀-Wert D₁₀(A) und einen D₉₀-Wert D₉₀(A) ist nun zu kleineren SiO₂-Partikeln zerbrochen und zermahlen. Die neue, endgültige Teilchengrößenverteilung D(B) ist gekennzeichnet durch einen D₁₀-Wert D₁₀(B) und einen D₉₀-Wert D₉₀(B). Der Anteil der Bruchstücke der Granulatteilchen ist in Tabelle 1 als "splittrige Körnung" angegeben ist. Dieser Anteil wird anhand eine mikroskopischen Partikelanalyse grob abgeschätzt.

Der Unterschied zwischen D₉₀(A) und D₉₀(B) kann als Maß für die Intensität des Mahlvorgangs betrachtet werden. Der Unterschied zwischen D₁₀(A) und D₁₀(B) gibt eine Information über die Festigkeit der Granulatteilchen vor dem Mahlprozess.

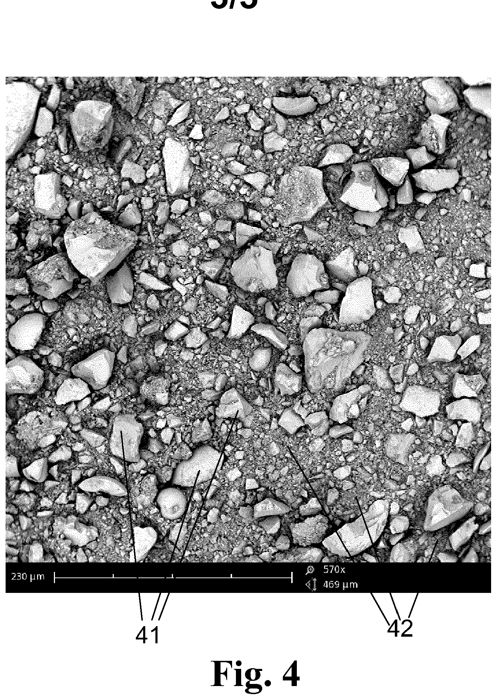

Die REM-Aufnahme von **Figur 4** zeigt das Ergebnis der Nassmahlung der teilverdichteten und vorher sphärischen und weitegehend monomodalen Granulat-Körnung. Nach dem Mahlvorgang sind fast nur noch Bruchstücke - also splittriger Teilchen 41 - sowie eine mehre oder weniger homogene Masse 42 aus Feinteilchen erkennbar.

Nach dem für alle untersuchten Granulate identisch ausgeführten Mahlvorgang stellt sich für das statisch hochverdichtete Granulat der Charge Nr. 7 (Tabelle 1) ein signifikant erhöhter BET-Wert von 5,3 m²/g (BET-(B)) ein, während das vakuumverdichtete Referenzgranulat "R" sowohl vor als auch nach der Nassmahlung zwar die nahezu gleiche Teilchengrößenverteilung (siehe Spalten 4 bis 7 von Tabelle 1), jedoch nach der Nassmahlung einen BET-Wert von lediglich 3,8 m²/g (BET-(B)) aufweist. Dies ist neben dem visuell transluzent-opaken Erscheinungsbild ein experimenteller Beleg dafür, dass bei der statischen Verdichtung das Granulat nicht vollständig verdichtet wird, sondern weiterhin Poren enthält. Die geschlossenen Poren werden durch den Mahlprozess wieder teilweise freigelegt, so dass sie in der BET-Messung nach dem Mahlen als erhöhte BET-Oberfläche messtechnisch nachgewiesen werden können.

### Herstellung eines Grünkörpers und eines porösen SiO₂-Rohlings

Der Schlicker 5 wird in eine Druckgussform einer kommerziellen Druckgussmaschine gegossen und über eine poröse Kunststoffmembran unter Bildung eines porösen Grünkörpers 6 entwässert. Der Grünkörper 6 hat die Form eines Ringförmigen Flansches für einen RTP-Reaktor für die Behandlung von Wafern.

Zum Entfernen von gebundenem Wasser wird der Grünkörper 6 bei etwa 90 °C fünf Tage lang in einem belüfteten Ofen getrocknet und nach dem Abkühlen wird der erhaltene poröse Rohling 7 mechanisch nahezu auf das Endmaß des herzustellenden Quarzglas-Flansches bearbeitet. Der aus unverdichtetem Sprühgranulat erhaltene Grünkörper zeigte eine so geringe Festigkeit, dass weder die mechanische Nachbehandlung noch die Messungen von Gründichte und Grünfestigkeit möglich waren.

Der ansonsten als Zwischenprodukt anfallende Rohling 7 liegt als offenporiger SiO₂-Grünkörper mit einer Dichte von mindestens 1,8 g/cm³ vor. Die in Tabelle 1 genannten Gründichte-Werte wurden anhand des Gewichts und der Messung des Porenvolumens mittels eines Porosimeters ermittelt (zum Vergleich: die spezifische Dichte von transparentem, undotiertem Quarzglas liegt bei etwa 2,2 g/cm³).

Aus der Spalte "Gründichte" von Tabelle 1 ist zu entnehmen, dass sich die vorteilhafte Mindestgründichte des Grünkörpers bei den Körnungen der Chargen 1 bis 3 nicht einstellt.

Als für den praktischen Einsatz erforderliche und die Weiterverarbeitung sinnvolle Mindest-Zugfestigkeit des Grünkörpers werden etwa 2 MPa (∼ 2 MPa) angesehen. In der Spalte "Grünfestigkeit" ist angegeben, ob diese Festigkeit bei der jeweiligen Charge erreicht worden ist. Die geringe Grünfestigkeit der Chargen 0 bis 4 korrespondiert mit hohen Werten dieser Proben für die BET-Oberfläche, der spezifischen Außenfläche und der spezifischen Mikroporenfläche der teilverdichteten Granulate. Die Chargen 0 bis 4 bilden insoweit Vergleichsbeispiele für die Erfindung mit einer unzureichenden Teilverdichtung.

Eine geeignete Teilverdichtung des SiO₂-Granulats ergibt sich demnach lediglich bei Charge Nr. 6 und insbesondere bei der langzeitverdichteten Charge Nr. 7. Diese Proben zeigen nach der thermischen Teilverdichtung sehr geringe BET-Oberflächen von 2,5 m²/g beziehungsweise von 0,07 m²/g sowie eine spezifischen Mikroporenfläche von 1 m²/g und weniger. Erst die vergleichsweise hohe Verdichtung ermöglicht einen intensiven Zerkleinerungsprozess, in dem nicht nur neue reaktive Oberfläche, sondern auch Bruchstücke mit einer Morphologie geschaffen werden, was beides für ein dichtes, flächiges Zusammenlagern und eine gegenseitige Verzahnung der zerkleinerten SiO₂-Granulatteilchen Teilchen förderlich ist. Diese flächige Verzahnung an frisch erzeugten Bruchflächen der SiO₂-Granulatteilchen bildet im Grünkörper eine Art "Kartenhausstruktur", die eine hohe Dichte des Grünkörpers (Gründichte) ermöglicht und die sich auf die Grünfestigkeit positiv auswirkt.

Im Vergleich dazu führt die Referenzprobe aus dem vollständig verdichteten Granulat dazu, dass die Körner während der Verdichtung zusammensintern und dann mehr oder minder aufwändig und insbesondere kontaminationsträchtig voneinander getrennt werden müssen.

Im Diagramm von **Figur 2** sind auf der linken Ordinate die BET-Oberfläche "BET" (in m²/g) und auf der rechten Ordinate die spezifische Außenfläche (A_{A}) und die spezifische Mikroporenfläche (A_{P}) jeweils in (m²/g) für die einzelnen Chargen aufgetragen.

### Herstellung eines Formkörpers aus opakem, synthetischem Quarzglas

Zum Sintern des Rohlings 7 wird dieser in einem Sinterofen unter Luft innerhalb von einer Stunde auf eine Heiztemperatur von 1350 °C aufgeheizt und bei dieser Temperatur 5h gehalten. Das Abkühlen erfolgt mit einer Abkühlrampe von 1 °C/min auf eine Ofentemperatur von 1000 °C und danach ungeregelt bei geschlossenem Ofen.

Der so erhaltene opake Quarzglasring wird plan geschliffen, so dass eine mittlere Oberflächenrauigkeit Ra von etwa 1 µm erhalten wird. Der Außendurchmesser beträgt 400 mm, der Innendurchmesser 300 mm und die Ringdicke 50 mm. Visuell erscheint die Oberfläche weiß und matt. In der mikroskopischen Ansicht auf die geschliffene Oberfläche ist eine Vielzahl fein verteilter Poren erkennbar. Die Poren haben maximale Abmessungen von weniger als 25 µm.

**Tabelle 1**

| **Charge** | **Art der (Teil-) Verdichtung** | **D₁₀ (A)** | **D₉₀ (A)** | **D₁₀ (B)** | **D₉₀ (B)** | **Anteil splittrige Körnung** | **Schüttdichte** | **BET (A)** | **BET (B)** | **Spezif. Mikroporenfläche (BET)** | **Spezif. Außenfläche (BET)** | **Gründichte pG** | **Grünfestigkeit** |
|---|---|---|---|---|---|---|---|---|---|---|---|---|---|
| | | **[µm]** | **[µm]** | **[µm]** | **[µm]** | % | **kg/l** | **[m²/g]** | **[m²/g]** | **[m²/g]** | **[m²/g]** | **[g/cm³]** | **[MPa]** |
| 0 | Sprühturm 400°C | 110 | 280 | | | 0 | 0,8 | 31,7 | n. b. | 3,30 | 27,4 | - | <1 |
| 1 | 1x Durchlaufofen 1200°C, 4h | 95 | 250 | 0,5 | 55 | 100 | 0,90 | 20,5 | n. b. | 0,59 | 19,9 | 1,50 | <1 |
| 2 | 2x Durchlaufofen 1200°C, 8h | 94 | 252 | 0,6 | 50 | 100 | 0,92 | 13,7 | n. b. | 0,27 | 13,4 | 1,54 | ∼1 |
| 3 | 3x Durchlaufofen 1200°C, 12h | 91 | 255 | 0,8 | 50 | 100 | 0,93 | 9,5 | n. b. | 0,32 | 9,2 | 1,59 | ∼1 |
| 4 | 4x Durchlaufofen 1200°C, 16h | 87 | 248 | 1,0 | 48 | 98 | 0,94 | 7,3 | n. b. | 0,40 | 6,9 | 1,63 | ∼1 |
| 5 | 5x Durchlaufofen 1200°C, 20h | 84 | 245 | 1,2 | 45 | 97 | 0,96 | 4,7 | 13,8 | 0,26 | 4,4 | 1,65 | ∼2 |
| 6 | 6x Durchlaufofen 1200°C, 24h | 93 | 261 | 1,5 | 44 | 95 | 0,98 | 2,5 | 9,3 | 0,25 | 2,2 | 1,66 | ∼2 |
| 7 | Kammerofen 1200°C; 36h | 120 | 285 | 5 | 44 | 92 | 0,99 | 0,07 | 5,3 | 0,00 | 0,07 | 1,71 | ∼3 |
| R | Kammerofen, 1450°C, 4h, Vak. | 120 | 285 | 5 | 45 | 89 | 1,20 | 0,06 | 3,8 | 0,00 | 0,06 | 1,83 | ∼3 |

## Patentansprüche

1. Verfahren zur Herstellung eines Poren enthaltenden, opaken Quarzglases umfassend die Verfahrensschritte:
(a) Erzeugen poröser SiO₂-Granulatteilchen durch Agglomeration amorpher, synthetisch erzeugter SiO₂-Primärpartikel,
(b) Thermisches Verdichten der SiO₂-Granulatteilchen unter Bildung von teilverdichteten SiO₂-Granulatteilchen,
(c) Bilden einer Dispersion, die eine Dispersionsflüssigkeit und darin dispergierte, teilverdichtete SiO₂-Granulatteilchen enthält,
(d) Zerkleinern mindestens eines Teils der teilverdichteten SiO₂-Granulatteilchen in der Dispersion unter Bildung eines Schlickers, der zerkleinerte SiO₂-Granulatteilchen enthält,
(e) Formen des Schlickers zu einem Formkörper und Entzug von Dispersionsflüssigkeit unter Bildung eines porösen SiO₂-Grünkörpers mit einer Gründichte pG, und
(f) Sintern des SiO₂-Grünkörpers zu dem opaken Quarzglas,
**dadurch gekennzeichnet,**
(i) **dass** beim thermischen Verdichten von Verfahrensschritt (b) teilverdichtete SiO₂-Granulatteilchen mit einer per BET-Sorptionsmessung ermittelten spezifischen Oberfläche BET-(A) im Bereich von 0,025 und 2,5 m²/g erzeugt werden,
(ii) **dass** beim Zerkleinern von Verfahrensschritt (d) zerkleinerte SiO₂-Granulatteilchen mit einer per BET-Sorptionsmessung ermittelten spezifischen Oberfläche BET-(B) im Bereich von 4 und 10 m²/g erzeugt werden,

2. Verfahren nach Anspruch 1, **dadurch gekennzeichnet, dass** beim thermischen Verdichten SiO₂-Granulatteilchen mit einer per BET-Sorptionsmessung ermittelten spezifischen Oberfläche von weniger als 0,8 m²/g erzeugt werden.

3. Verfahren nach Anspruch 1 oder 2, **dadurch gekennzeichnet, dass** die SiO₂-Granulatteilchen vor dem Zerkleinern gemäß Verfahrensschritt (d) bei einer Temperatur im Bereich von 800 °C bis 1300 °C derart teilverdichtet werden, dass die teilverdichteten SiO₂-Granulatteilchen eine per BET-Sorptionsmessung ermittelte spezifische Mikroporenfläche von ≤ 0,25 m²/g, bevorzugt eine Mikroporenfläche ≤ 0,1 m²/g aufweisen.

4. Verfahren nach einem der vorhergehenden Ansprüche, **dadurch gekennzeichnet, dass** die zerkleinerten SiO₂-Granulatteilchen eine endgültige Teilchengrößenverteilung aufweisen, definiert durch einen D₁₀-Wert D₁₀(B) < 5 µm und einen D₉₀-Wert D₉₀(B) < 50 µm.

5. Verfahren nach Anspruch 4 **dadurch gekennzeichnet, dass** die SiO₂-Granulatteilchen in der Dispersion mit einer anfänglichen Teilchengrößenverteilung, definiert durch einen D₁₀-Wert D₁₀(A) > 15 µm und einen D₉₀-Wert D₉₀(A) > 105 µm dispergiert sind.

6. Verfahren nach einem der vorhergehenden Ansprüche, **dadurch gekennzeichnet, dass** mindestens 80 % der SiO₂-Teilchen mit einer Teilchengröße von mehr als 5 µm splittrige Morphologie haben.

7. Verfahren nach Anspruch 6, dass mindestens 90 % der SiO₂-Teilchen mit einer Teilchengröße von mehr als 5 µm splittrige Morphologie haben.

8. Verfahren nach einem der vorhergehenden Ansprüche, **dadurch gekennzeichnet, dass** der Schlicker beim Formen zu dem Formkörper SiO₂-Teilchen in einem Gewichtsanteil von mindestens 70 %, vorzugsweise mindestens 75 % enthält.

9. Verfahren nach einem der vorhergehenden Ansprüche, **dadurch gekennzeichnet, dass** der Schlicker beim Formen zu dem Formkörper eine mehrmodale Teilchengrößenverteilung aufweist, mit einem ersten Maximum bei einer Teilchengröße von weniger als 5 µm und einem zweiten Maximum bei einer Teilchengröße von mehr als 20 µm.

10. Verfahren nach einem der vorhergehenden Ansprüche, **dadurch gekennzeichnet, dass** die SiO₂-Granulatteilchen mit einer Schüttdichte im Bereich von 0,7 bis 1 g/cm³ erzeugt werden.

11. Verfahren nach einem der vorhergehenden Ansprüche, **dadurch gekennzeichnet, dass** das Teilverdichten unter einer chlorhaltigen Atmosphäre erfolgt.

12. Verfahren nach einem der vorhergehenden Ansprüche, **dadurch gekennzeichnet, dass** der Schlicker vor dem Formen zu dem Formkörper gemäß Verfahrensschritt (e) einem Vakuum ausgesetzt wird.

13. Verfahren nach einem der vorhergehenden Ansprüche, **dadurch gekennzeichnet, dass** die Gründichte des SiO₂-Grünkörpers auf einen Wert pG auf einen Wert im Bereich 1,6 ≤ pG ≤ 1,9 g/cm³ eingestellt wird.

## Claims

1. Method for producing a pore-containing opaque quartz glass, the method comprising the steps of:
(a) producing porous SiO₂ granulate particles by agglomeration of amorphous, synthetically produced SiO₂ primary particles,
(b) thermally densifying the SiO₂ granulate particles to form partly densified SiO₂ granulate particles,
(c) forming a dispersion containing a dispersion liquid and the partly densified SiO₂ granulate particles dispersed therein,
(d) comminuting at least a part of the partly densified SiO₂ granulate particles in the dispersion to form a slip which contains comminuted SiO₂ granulate particles,
(e) shaping the slip into a shaped body and removing the dispersion liquid to form a porous SiO₂ green body with a green density pG, and
(f) sintering the SiO₂ green body into the opaque quartz glass,
**characterized in**
(i) **that** during the thermal densification of step (b), the partly densified SiO₂ granulate particles are produced with a specific surface BET-(A) in the range of 0.025 to 2.5 m²/g determined by BET sorption measurement, and
(ii) **that** during the comminution of step (d), the comminuted SiO₂ granulate particles are produced with a specific surface BET-(B) in the range of 4 to 10 m²/g determined by BET sorption measurement.

2. Method according to claim 1, **characterized in that** during the thermal densification, the SiO₂ granulate particles are produced with a specific surface of less than 0.8 m²/g determined by BET sorption measurement.

3. Method according to claim 1 or 2, **characterized in that** the SiO₂ granulate particles prior to the comminution according to step (d) are partly densified at a temperature in the range of 800°C to 1300°C, such that the partly densified SiO₂ granulate particles have a specific micropore surface of ≤ 0.25 m²/g, preferably a micropore surface of ≤ 0.1 m²/g, which is determined by BET sorption measurement.

4. Method according to any one of the preceding claims, **characterized in that** the comminuted SiO₂ granulate particles have a final particle size distribution defined by a D₁₀ value D₁₀(B) < 5 µm and a D₉₀ value D₉₀(B) < 50 µm.

5. Method according to claim 4, **characterized in that** the SiO₂ granulate particles are dispersed in the dispersion with an initial particle size distribution defined by a D₁₀ value D₁₀(A) > 15 µm and a D₉₀ value D₉₀(A) > 105 µm.

6. Method according to any one of the preceding claims, **characterized in that** at least 80% of the SiO₂ particles with a particle size of more than 5 µm have a splintery morphology.

7. Method according to claim 6, **characterized in that** at least 90% of the SiO₂ particles with a particle size of more than 5 µm have a splintery morphology.

8. Method according to any one of the preceding claims, **characterized in that** the slip while being shaped into the shaped body contains SiO₂ particles at a weight percentage of at least 70%, preferably at least 75%.

9. Method according to any one of the preceding claims, **characterized in that** the slip while being shaped into the shaped body has a multimodal particle size distribution, with a first maximum at a particle size of less than 5 µm and a second maximum at a particle size of more than 20 µm.

10. Method according to any one of the preceding claims, **characterized in that** the SiO₂ granulate particles are produced with a bulk density in the range of 0.7 to 1 g/cm³.

11. Method according to any one of the preceding claims, **characterized in that** partial densification is carried out in a chlorine-containing atmosphere.

12. Method according to any one of the preceding claims, **characterized in that** the slip prior to shaping into the shaped body according to method step (e) is exposed to a vacuum.

13. Method according to any one of the preceding claims, **characterized in that** the green density of the SiO₂ green body is set to a value pG to a value in the range of 1.6 ≤ pG ≤ 1.9 g/cm³

## Revendications

1. Procédé de production d'un verre de quartz opaque poreux, comprenant les étapes de procédé :
(a) production de particules poreuses de matériau granulaire de SiO₂ par agglomération de particules primaires amorphes de SiO₂ produites de manière synthétique,
(b) compression thermique des particules de matériau granulaire de SiO₂ afin de former des particules de matériau granulaire de SiO₂ partiellement comprimées,
(c) formation d'une dispersion, qui contient un liquide de dispersion et des particules de matériau granulaire de SiO₂ partiellement comprimées dispersées dans celui-ci,
(d) broyage d'au moins une partie des particules de matériau granulaire de SiO₂ partiellement comprimées dans la dispersion afin de former une barbotine, qui contient des particules de matériau granulaire de SiO₂ broyées,
(e) moulage de la barbotine en un corps moulé et retrait de liquide de dispersion afin de former un corps cru poreux de SiO₂, ayant une densité en cru pG, et
(f) frittage du corps cru de SiO₂ pour obtenir le verre de quartz opaque,
**caractérisé en ce que**
(i) lors de la compression thermique de l'étape de procédé (b), des particules de matériau granulaire de SiO₂ partiellement comprimées ayant une surface spécifique BET-(A), déterminée par mesure de sorption selon BET, comprise entre 0,025 et 2,5 m2/g sont produites,
(ii) lors du broyage de l'étape de procédé (d), des particules de matériau granulaire de SiO₂ broyées ayant une surface spécifique BET-(B), déterminée par mesure de sorption selon BET, comprise entre 4 et 10 m²/g sont produites.

2. Procédé selon la revendication 1, **caractérisé en ce que**, lors de la compression thermique, des particules de matériau granulaire de SiO₂ ayant une surface spécifique, déterminée par mesure de sorption selon BET, inférieure à 0,8 m²/g sont produites.

3. Procédé selon la revendication 1 ou 2, **caractérisé en ce que**, avant le broyage selon l'étape de procédé (d), les particules de matériau granulaire de SiO₂ sont comprimées partiellement à une température comprise entre 800 °C et 1300 °C de telle manière que les particules de matériau granulaire de SiO₂ partiellement comprimées présentent une surface de micropores spécifique, déterminée par mesure de sorption selon BET, ≤ 0,25 m²/g, de préférence une surface de micropores ≤ 0,1 m²/g.

4. Procédé selon l'une des revendications précédentes, **caractérisé en ce que** les particules de matériau granulaire de SiO₂ broyées présentent une répartition granulométrique définitive, définie par une valeur D₁₀ de D₁₀(B) < 5 µm et une valeur D₉₀ de D₉₀(B) < 50 µm.

5. Procédé selon la revendication 4, **caractérisé en ce que** les particules de matériau granulaire de SiO₂ sont dispersées dans la dispersion avec une répartition granulométrique initiale, définie par une valeur D₁₀ de D₁₀(A) > 15 µm et une valeur D₉₀ de D₉₀(A) > 105 µm.

6. Procédé selon l'une des revendications précédentes, **caractérisé en ce qu'**au moins 80 % des particules de SiO₂ ayant une taille de particule supérieure à 5 µm ont une morphologie friable.

7. Procédé selon la revendication 6, **caractérisé en ce qu'**au moins 90 % des particules de SiO₂ ayant une taille de particule supérieure à 5 µm ont une morphologie friable.

8. Procédé selon l'une des revendications précédentes, **caractérisé en ce que**, lors du moulage en corps moulé, la barbotine contient une part en poids d'au moins 70 %, de préférence d'au moins 75 %, de particules de SiO₂.

9. Procédé selon l'une des revendications précédentes, **caractérisé en ce que**, lors du moulage en corps moulé, la barbotine présente une répartition granulométrique multimodale, avec un premier maximum à une taille de particule inférieure à 5 µm et un second maximum à une taille de particule supérieure à 20 µm.

10. Procédé selon l'une des revendications précédentes, **caractérisé en ce que** les particules de matériau granulaire de SiO₂ sont produites avec une densité apparente comprise entre 0,7 et 1 g/cm³.

11. Procédé selon l'une des revendications précédentes, **caractérisé en ce que** la compression partielle est effectuée sous atmosphère chlorée.

12. Procédé selon l'une des revendications précédentes, **caractérisé en ce que**, avant le moulage en corps moulé selon l'étape de procédé (e), la barbotine est exposée au vide.

13. Procédé selon l'une des revendications précédentes, **caractérisé en ce que** la densité en cru du corps cru de SiO₂ est réglée sur une valeur pG comprise entre 1,6 ≤ pG ≤ 1,9 g/cm³.
